# EUROPEAN PATENT APPLICATION

(11) **EP 4 685 966 A1**
(43) Date of publication of application: **28.01.2026**
(21) Application number: 24879942.1
(22) Date of filing: 27.08.2024
(51) Int. Cl.: H01M 50/333, F16K 17/04, H01M 50/211, H01M 50/213, H01M 50/249

(54) **BATTERY ASSEMBLY**

(30) Priority: 16.10.2023 KR 20230137970
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2024/012797
(87) International publication number: WO 2025/084602

(57) **Abstract**

Disclosed is a battery assembly. The battery assembly includes a case providing a space therein and having an opening; a battery cell located inside the case; and a gas valve having a cover installed in the opening and configured to move in a front and rear direction and a resisting member formed on an inner surface of the cover.

## Description

### TECHNICAL FIELD

The present disclosure relates to a battery assembly.

This application is based on and claims priority from Korean Patent Application No. 10-2023-0137970, filed on October 16, 2023, with the Korean Intellectual Property Office, the disclosure of which is incorporated herein in its entirety by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby.

In particular, when ignitable particles are emitted from a battery module or a battery pack, the risk of a chain reaction occurrence increases. Therefore, it is necessary to suppress or block the emission of ignitable particles from a battery module or a battery pack.

### DISCLOSURE

### Technical Problem

The present disclosure is designed to solve these and other problems.

The present disclosure is directed to providing a battery assembly with improved electrical safety when a thermal event occurs.

The present disclosure is also directed to providing a battery assembly that may suppress or block the emission of ignitable particles, flames, etc. while emitting a venting gas when a thermal event occurs.

### Technical Solution

In one aspect of the present disclosure, there is provided a battery assembly comprising: a case providing a space therein and having an opening; a battery cell located inside the case; and a gas valve having a cover installed in the opening and configured to move in a front and rear direction and a resisting member formed on an inner surface of the cover.

In addition, the gas valve may be configured to suppress discharge of particles when a thermal event occurs.

In addition, the cover may be open to a rear side and provide a space therein.

In addition, the resisting member may be provided in plurality, and the plurality of resisting members may be arranged along a perimeter of the cover.

In addition, the cover may include a plate configured to cover the opening; and a perimeter wall configured to protrude rearward from the plate, and the resisting member may be provided on an inner surface of the perimeter wall.

In addition, the resisting member may include a first partition configured to extend inward; and a second partition configured to extend obliquely from the first partition.

In addition, the resisting member may form a pocket configured to capture particles discharged from the opening.

In addition, the case may constitute a module case of a battery module.

In addition, the case may constitute a pack case of a battery pack.

A vehicle according to another aspect of the present disclosure may include the battery assembly of the present disclosure.

### Advantageous Effects

According to at least one of the embodiments of the present disclosure, the thermal safety of the battery assembly may be improved.

According to at least one of the embodiments of the present disclosure, the emission of ignitable particles from a battery assembly may be suppressed or blocked.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a gas valve of a battery assembly according to an embodiment of the present disclosure.
FIG. 2 is a drawing showing the gas valve of FIG. 1 viewed from a different direction.
FIG. 3 is a drawing showing the gas valve of FIG. 1 in which some components are exploded.
FIG. 4 is a drawing showing that the gas valve of the battery assembly according to an embodiment of the present disclosure is in a closed state.
FIG. 5 is a drawing showing the gas valve of FIG. 4 viewed from a different direction.
FIG. 6 is a top view showing the gas valve of FIG. 4.
FIG. 7 is a drawing showing that the gas valve of the battery assembly according to an embodiment of the present disclosure is in an open state.
FIG. 8 is a top view showing the gas valve of FIG. 7.
FIG. 9 is a rear view showing the gas valve of the battery assembly according to an embodiment of the present disclosure.
FIG. 10 is a drawing showing the gas valve of FIG. 9 when a thermal event occurs.
FIGS. 11 to 13 are drawings showing modified embodiments of FIG. 9.
FIGS. 14 to 16 are drawings showing modified embodiments of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

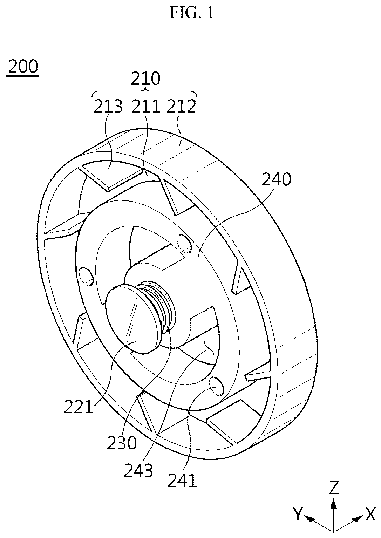

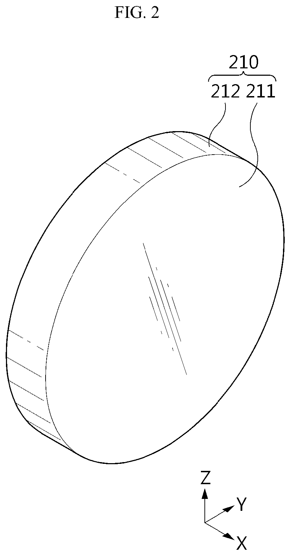

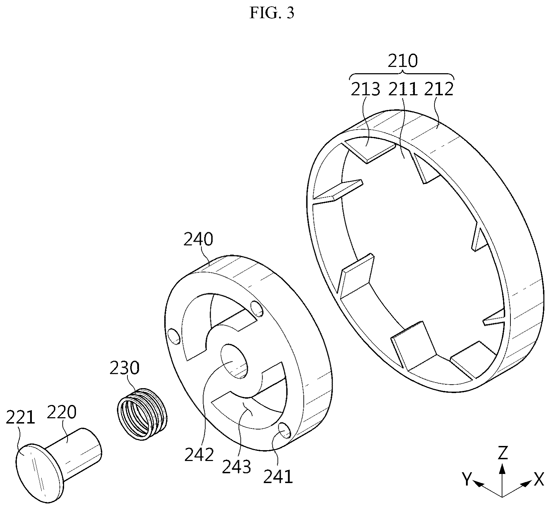

FIG. 1 is a drawing showing a gas valve 200 of a battery assembly according to an embodiment of the present disclosure. FIG. 2 is a drawing showing the gas valve 200 of FIG. 1 viewed from a different direction. FIG. 3 is a drawing showing the gas valve 200 of FIG. 1 in which some components are exploded.

Referring to FIGS. 1 to 3, the battery assembly according to an embodiment of the present disclosure may include a case 100, a battery cell, and a gas valve 200. The battery assembly may refer to a collection of various battery cells, such as a battery module or a battery pack. The case 100 may provide a space therein. At this time, the case 100 may refer to the case 100 of the battery module or the case 100 of the battery pack. The case 100 may have a rectangular parallelepiped shape. The case 100 may form the appearance of the battery assembly. In addition, the case 100 may have an opening 101. The opening 101 may have a circular shape. The opening 101 may communicate the inside and the outside of the case 100. The opening 101 may be provided in plurality.

The battery cell may be located inside the case 100. At this time, the battery cell may mean a secondary battery. The battery cell may have various shapes. For example, the battery cell may have a cylindrical shape or a pouch shape. The battery cell may be provided in plurality.

The gas valve 200 may be installed in the opening 101. The gas valve 200 may be provided in plurality. The plurality of gas valves 200 may be installed to correspond to the plurality of openings 101 in one-to-one relationship. The gas valve 200 may include a cover 210 configured to be movable in the front and rear direction. Also, the gas valve 200 may have a resisting member 213 formed on the inner surface of the cover 210. The gas valve 200 may open and close the opening 101. The gas valve 200 may communicate or block the inside and the outside of the case 100.

According to this configuration of the present disclosure, the thermal safety of the battery assembly may be improved. When a thermal event occurs, a venting gas g and ignitable particles f may be discharged to the outside of the case 100 through the gas valve 200. At this time, the discharge of the ignitable particles f may be suppressed or blocked by the resisting member 213. Accordingly, while the discharge of the ignitable particles f is suppressed or blocked, the temperature of the ignitable particles f may be lowered. Meanwhile, the discharge of the venting gas g may be smoothly performed.

Referring to FIGS. 1 to 3, the gas valve 200 of the battery assembly according to an embodiment of the present disclosure may include a fixing portion 240, a spring 230, a coupling bar 220, and a cover 210. The fixing portion 240 may be installed, coupled, fastened, fixed, or attached to the opening 101. The fixing portion 240 may have a fastening hole 241. In addition, the fixing portion 240 may have a venting hole 243. The venting hole 243 may communicate the inside and the outside of the case 100. In addition, the fixing portion 240 may have a coupling hole 242.

The coupling bar 220 may be provided in the coupling hole 242. The coupling bar 220 may be extended long in the front and rear direction or the X-axis direction. One end or the rear end of the coupling bar 220 may include a stopper 221. The stopper 221 may have a larger diameter than the coupling hole 242. The coupling bar 220 may be connected, coupled, fastened, fixed or attached to the rear surface of the cover 210. Alternatively, the coupling bar 220 and the cover 210 may be formed integrally.

The spring 230 may be coupled to the coupling bar 220. The spring 230 may be located between the fixing portion 240 and the stopper 221. The cover 210 may cover the opening 101 and the venting hole 243. When a thermal event occurs, if the pressure inside the case 100 increases, the spring 230 may be compressed and the cover 210 may move forward or in the +X-axis direction. Also, if the pressure inside the case 100 decreases, the spring 230 may be restored and the cover 210 may move rearward or in the -X-axis direction.

Referring to FIGS. 1 to 3, the gas valve 200 of the battery assembly according to an embodiment of the present disclosure may provide a space therein. The cover 210 may be opened rearward and provide a space therein.

According to this configuration of the present disclosure, the venting gas g and the ignitable particles f discharged from the inside of the case 100 may flow into the cover 210 and then be discharged to the outside of the case 100. During this process, the venting gas g and the ignitable particles f may contact or collide with the resisting member 213. As a result, the discharge of the ignitable particles f may be suppressed or blocked.

Referring to FIGS. 1 to 3, the cover 210 of the gas valve 200 of the battery assembly according to an embodiment of the present disclosure may include a plate 211 and a perimeter wall 212. The plate 211 may cover an opening 101 or a venting hole 243. The plate 211 may have a flat plate shape. Also, the plate 211 may have a disc shape. The perimeter wall 212 may protrude rearward from the plate 211. The perimeter wall 212 may extend along the perimeter of the plate 211. The plate 211 and the perimeter wall 212 may form a space therein.

In addition, the resisting member 213 may be provided on the inner surface of the perimeter wall 212. Also, the resisting member 213 may be provided on the rear surface of the plate 211. The resisting member 213 may extend from at least one of the perimeter wall 212 and the plate 211.

According to this configuration of the present disclosure, the venting gas g and the ignitable particles f discharged from the inside of the case 100 may flow into the space formed by the plate 211 and the perimeter wall 212 and then be discharged to the outside of the case 100. During this process, the venting gas g and the ignitable particles f may contact or collide with the resisting member 213. As a result, the discharge of the ignitable particles f may be suppressed or blocked.

Referring to FIGS. 1 to 3, the battery assembly according to an embodiment of the present disclosure may include a plurality of resisting members 213. The plurality of resisting members 213 may be arranged along the perimeter of the cover 210. The cover 210 may have a circular shape, and the plurality of resisting members 213 may be arranged to form a circle. The plurality of resisting members 213 may be formed integrally with the cover 210.

According to this configuration of the present disclosure, since the resisting members 213 are formed along the perimeter of the cover 210, it is possible to provide a uniform flow resistance throughout the entire section of the gas valve 200. As a result, the discharge of the ignitable particles f may be effectively suppressed or blocked.

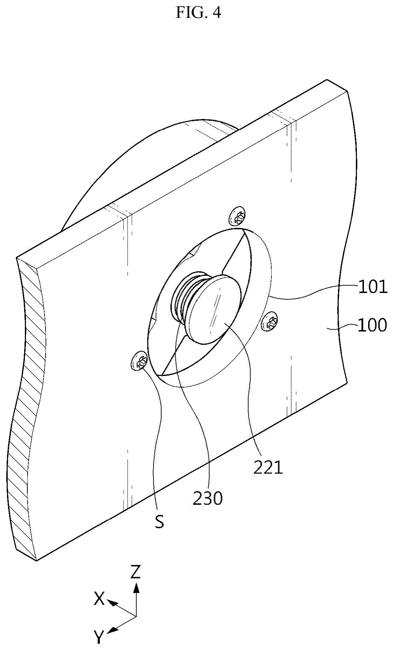

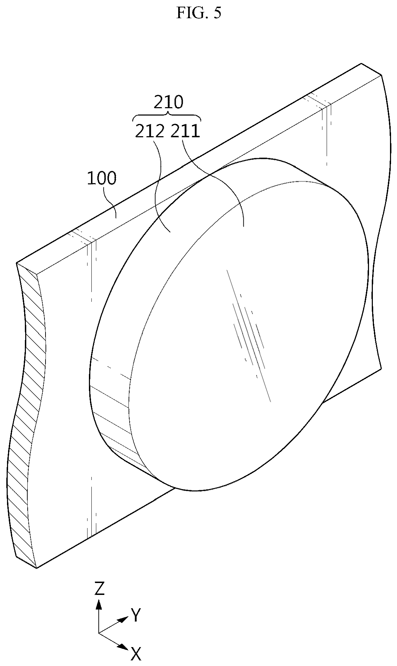

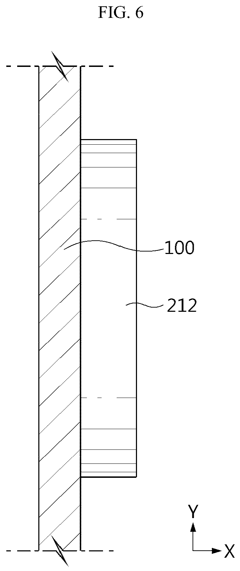

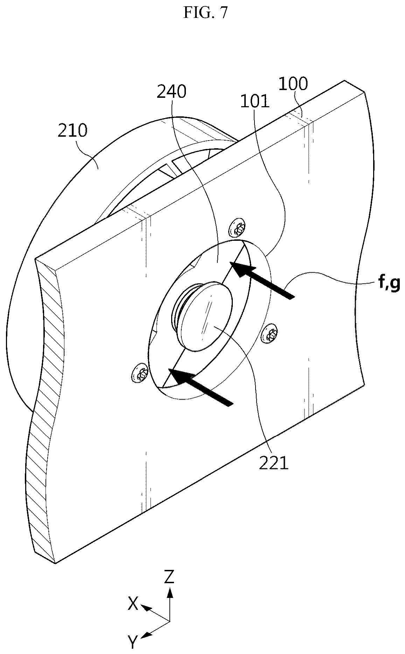

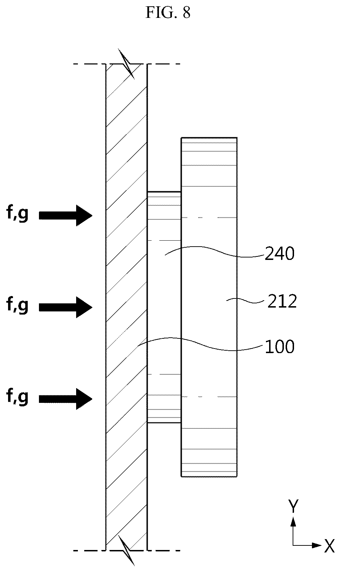

FIG. 4 is a drawing showing that the gas valve 200 of the battery assembly according to an embodiment of the present disclosure is in a closed state. FIG. 5 is a drawing showing the gas valve 200 of FIG. 4 viewed from a different direction. FIG. 6 is a top view showing the gas valve 200 of FIG. 4. FIG. 7 is a drawing showing that the gas valve 200 of the battery assembly according to an embodiment of the present disclosure is in an open state. FIG. 8 is a top view showing the gas valve 200 of FIG. 7.

Referring to FIGS. 4 to 8, the gas valve 200 of the battery assembly according to an embodiment of the present disclosure may be installed in the case 100 and may open and close the opening 101. The gas valve 200 may be in contact with the outer surface of the case 100. In addition, a fastening member S may be fastened to the fastening hole 241 of the fixing portion 240 inside the case 100. For example, three fastening members S may be arranged at the perimeter of the opening 101 and may be fastened to the fixing portion 240. The fastening members S may fix the fixing portion 240 to the case 100.

When a thermal event occurs, the pressure inside the case 100 may increase due to the venting gas g. As a result, the plate 211 of the cover 210 may be pressurized outward or in the +X-axis direction. At this time, the spring 230 may be compressed. Also, the space between the case 100 and the perimeter wall 212 of the cover 210 may be opened. The venting gas g and the ignitable particles f may pass through the venting hole 243 of the fixing portion 240 and contact or collide with the plate 211 and the resisting member 213 of the cover 210. At this time, the ignitable particles f may be suppressed or blocked from being discharged between the case 100 and the perimeter wall 212 of the cover 210 due to the resisting member 213. Meanwhile, the venting gas g may be smoothly discharged through the space between case 100 and the perimeter wall 212 even though it is resisted by resisting member 213.

When the thermal event ceases or the pressure inside the case 100 is lowered, the spring 230 may provide a restoring force to move the cover 210 rearward or in the -X-axis direction, and the space between the perimeter wall 212 of cover 210 and the case 100 may be closed.

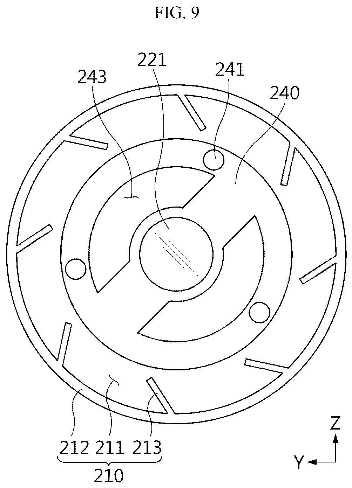

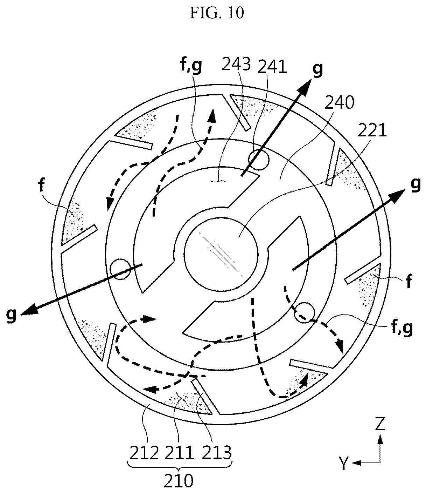

FIG. 9 is a rear view showing the gas valve 200 of the battery assembly according to an embodiment of the present disclosure. FIG. 10 is a drawing showing the gas valve 200 of FIG. 9 when a thermal event occurs.

Referring to FIGS. 9 and 10, the gas valve 200 of the battery assembly according to an embodiment of the present disclosure may be configured to suppress emission of particles when a thermal event occurs. The venting gas g and the ignitable particles f passing through the venting hole 243 may contact or collide with the plate 211 and the resisting member 213. The venting gas g may be discharged radially along the perimeter wall 212. Meanwhile, the ignitable particles f may be trapped in the space provided by the cover 210 due to the resisting member 213.

According to this configuration of the present disclosure, the thermal safety of the battery assembly may be improved by effectively suppressing or blocking the emission of the ignitable particles f.

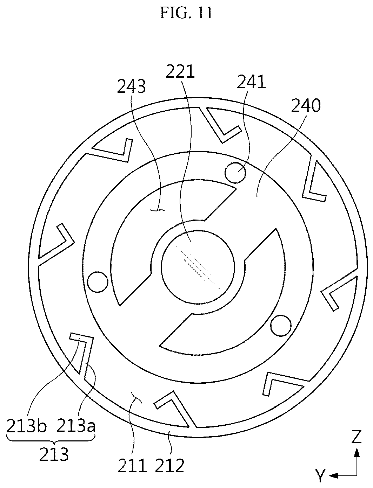

FIG. 11 is a drawing showing a modified embodiment of FIG. 9. Referring to FIG. 11, the resisting member 213 of the battery assembly according to an embodiment of the present disclosure may include a first partition 213a and a second partition 213b. The first partition 213a may extend from the perimeter wall 212 or the plate 211 toward the inside of the cover 210 or the coupling bar 220. The second partition 213b may extend from the first partition 213a. The second partition 213b may extend from one end of the first partition 213a. The first partition 213a and the second partition 213b may be positioned obliquely. Alternatively, the first partition 213a and the second partition 213b may be perpendicular.

According to this configuration of the present disclosure, the first partition 213a and the second partition 213b may form a space. In addition, the first partition 213a and the second partition 213b may further increase resistance to flow. As a result, the ignitable particles f may be more reliably suppressed or blocked from being discharged to the outside of the battery assembly.

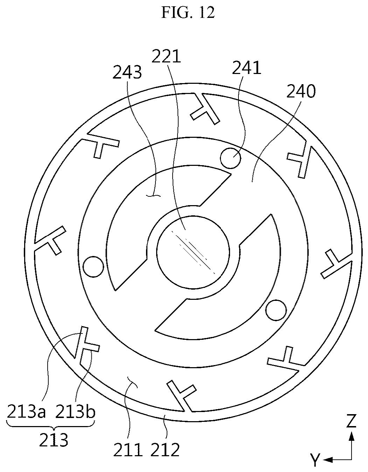

FIG. 12 is a drawing showing a modified embodiment of FIG. 9. Referring to FIG. 12, the resisting member 213 of the battery assembly according to an embodiment of the present disclosure may include a first partition 213a and a second partition 213b. The first partition 213a may extend from the perimeter wall 212 or the plate 211 toward the inside of the cover 210 or the coupling bar 220. The second partition 213b may extend from the first partition 213a. The second partition 213b may extend outward from the first partition 213a. Also, the second partition 213b may extend away from the perimeter wall 212. Also, the second partition 213b may extend from a middle portion of the first partition 213a. The first partition 213a and the second partition 213b may be positioned obliquely. Alternatively, the first partition 213a and the second partition 213b may be positioned orthogonally.

According to this configuration of the present disclosure, the first partition 213a and the second partition 213b may form a space. In addition, the first partition 213a and the second partition 213b may further increase resistance to flow. As a result, the ignitable particles f may be more reliably suppressed or blocked from being discharged to the outside of the battery assembly.

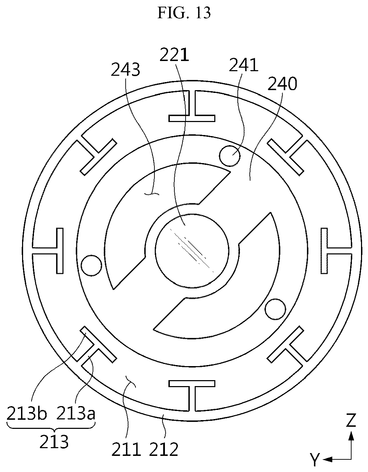

FIG. 13 is a drawing showing a modified embodiment of FIG. 9. Referring to FIG. 13, the resisting member 213 of the battery assembly according to an embodiment of the present disclosure may include a first partition 213a and a second partition 213b. The first partition 213a may extend from the perimeter wall 212 or the plate 211 toward the inside of the cover 210 or the coupling bar 220. The second partition 213b may extend from the first partition 213a. The second partition 213b may extend in both directions centered on one end of the first partition 213a. For example, the first partition 213a and the second partition 213b may form a T-shape. Alternatively, the first partition 213a and the second partition 213b may be positioned orthogonally.

According to this configuration of the present disclosure, the first partition 213a and the second partition 213b may form a space. In addition, the first partition 213a and the second partition 213b may further increase resistance to flow. As a result, the ignitable particles f may be more reliably suppressed or blocked from being discharged to the outside of the battery assembly.

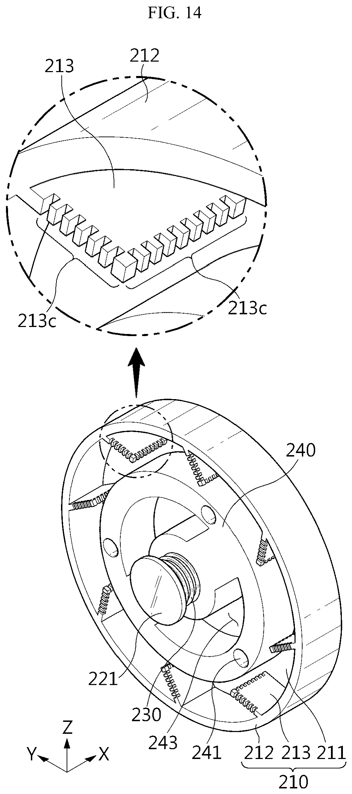

FIG. 14 is a drawing showing a modified embodiment of FIG. 1. Referring to FIG. 14, the resisting member 213 of the battery assembly according to an embodiment of the present disclosure may include a comb teeth portion 213c. The comb teeth portion 213c may be formed at a rear edge portion of the resisting member 213. Also, the comb teeth portion 213c may be formed at an edge of the resisting member 213 in the front and rear direction or the X-axis direction.

According to this configuration of the present disclosure, the comb teeth portion 213c may capture the ignitable particles f included in the flow and pass the venting gas g. Accordingly, the discharge of the ignitable particles f is effectively suppressed or blocked, thereby improving the thermal safety of the battery assembly.

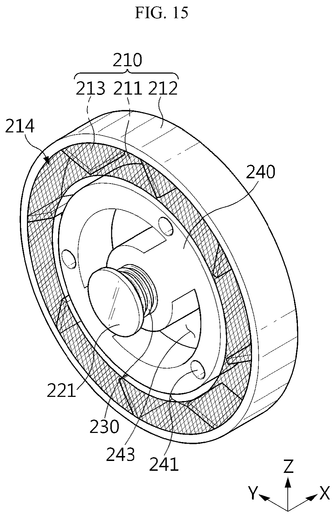

FIG. 15 is a drawing showing a modified embodiment of FIG. 1. Referring to FIG. 15, the resisting member 213 of the battery assembly according to an embodiment of the present disclosure may form a pocket. The resisting member 213 may include a mesh member 214. The mesh member 214 may be coupled, connected, attached, or fixed to a rear end of the perimeter wall 212 and a rear end of the resisting member 213. The mesh member 214 may connect a plurality of resisting members 213. Also, the mesh member 214 may extend along the perimeter wall 212. The mesh member 214 may contain a metal material. Also, the mesh member 214 may have a ring shape. The mesh member 214, the resisting member 213, and the perimeter wall 212 may form a collection space or pocket.

According to this configuration of the present disclosure, the mesh member 214 may capture the ignitable particles f included in the flow introduced into the collection space or pocket and allow the venting gas g to pass. As a result, the discharge of the ignitable particles f is effectively suppressed or blocked, thereby improving the thermal safety of the battery assembly.

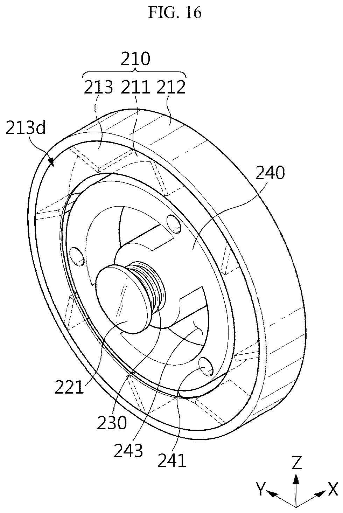

FIG. 16 is a drawing showing a modified embodiment of FIG. 1. Referring to FIG. 16, the resisting member 213 of the battery assembly according to an embodiment of the present disclosure may form a pocket. The resisting member 213 may include a third partition 213d. The third partition 213d may be coupled, connected, attached, or fixed to a rear end of the perimeter wall 212 and a rear end of the resisting member 213. The third partition 213d may connect a plurality of resisting members 213. In addition, the third partition 213d may extend along the perimeter wall 212. In addition, the third partition 213d may have a ring shape. The third partition 213d, the resisting member 213, and the perimeter wall 212 can form a collection space or pocket.

According to this configuration of the present disclosure, the mesh member 214 may capture the ignitable particles f included in the flow introduced into the collection space or pocket and allow the venting gas g to pass. As a result, the discharge of the ignitable particles f is effectively suppressed or blocked, thereby improving the thermal safety of the battery assembly.

In addition, when the battery assembly means a battery pack, the battery assembly according to the present disclosure may further include various components, for example components of the battery pack known at the time of filing of this application, such as a BMS, a bus bar, a relay, a current sensor, etc.

A vehicle according to the present disclosure may include the battery assembly according to the present disclosure described above. The battery assembly according to the present disclosure may be applied to vehicles such as electric vehicles or hybrid vehicles. In addition, the vehicle according to the present disclosure may further include various other components included in a vehicle, such as a body, a motor, and a control device like an ECU (electronic control unit), in addition to the battery assembly.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a case providing a space therein and having an opening;
a battery cell located inside the case; and
a gas valve having a cover installed in the opening and configured to move in a front and rear direction and a resisting member formed on an inner surface of the cover.

2. The battery assembly according to claim 1,
wherein the gas valve is configured to suppress discharge of particles when a thermal event occurs.

3. The battery assembly according to claim 1,
wherein the cover is open to a rear side and provides a space therein.

4. The battery assembly according to claim 1,
wherein the resisting member is provided in plurality, and the plurality of resisting members are arranged along a perimeter of the cover.

5. The battery assembly according to claim 1,
wherein the cover includes:
a plate configured to cover the opening; and
a perimeter wall configured to protrude rearward from the plate,
wherein the resisting member is provided on an inner surface of the perimeter wall.

6. The battery assembly according to claim 5,
wherein the resisting member includes:
a first partition configured to extend inward; and
a second partition configured to extend obliquely from the first partition.

7. The battery assembly according to claim 5,
wherein the resisting member forms a pocket configured to capture particles discharged from the opening.

8. The battery assembly according to any one of claims 1 to 7,
wherein the case constitutes a module case of a battery module.

9. The battery assembly according to any one of claims 1 to 7,
wherein the case constitutes a pack case of a battery pack.

10. A vehicle comprising the battery assembly according to any one of claims 1 to 7.
